# EUROPÄISCHE PATENTSCHRIFT

(11) **EP 1 897 718 B1**
(45) Veröffentlichungstag und Bekanntmachung des Hinweises auf die Patenterteilung: **14.10.2015**
(21) Anmeldenummer: 07015423.2
(22) Anmeldetag: 07.08.2007
(51) Int. Cl.: B60J 7/12

(54) **Faltverdeck**
Folding soft top
Capote pliable

(30) Priorität: 08.09.2006 DE 102006042286
(43) Veröffentlichungstag der Anmeldung: 12.03.2008
(73) Patentinhaber: Dr. Ing. h.c. F. Porsche AG, 70435 Stuttgart (DE)
(72) Erfinder: Fröschle, Mathias, 73760 Ostfildern (DE); Schulzki, Markus, 71638 Ludwigsburg (DE)

(56) Entgegenhaltungen:
- EP-A- 0 760 301
- WO-A-03/072380
- US-A- 4 693 509

## Beschreibung

Die Erfindung betrifft ein Faltverdeck in einem Kraftfahrzeug nach dem Oberbegriff des Anspruchs 1.
Ein solches Faltverdeck ist aus EP 0 760 301 bekannt.

Aus der EP 1 164 042 B1 ist ein Kraftfahrzeug-Faltverdeck mit einem Heckscheibenträger bekannt, welcher starr an einem Spannbügel des Faltverdecks befestigt ist. Der Spannbügel wird mit dem daran befestigten Heckscheibenträger durch das Verdeckgestänge des Faltverdecks zwischen einer angehobenen Stellung, in der der Spannbügel auf dem Verdeckkastendeckel der Karosserie aufsitzt, und einer abgesenkten Stellung, in der der Spannbügel um mehr als 180° geschwenkt im Verdeckkasten aufgenommen ist, hin und her bewegt, wenn das Faltverdeck geschlossen bzw. geöffnet wird. Zur Kopplung des Faltverdecks mit dem Spannbügel ist beiderseits des Heckrahmens jeweils ein Lenker angelenkt, welcher an dem Verdeckgestänge des Faltverdecks angelenkt ist.
Die DE 100 41 487 B4 offenbart ein Kraftfahrzeug-Faltverdeck mit Spannbügel, an welchem die Heckscheibe schwenkbar gelagert ist. Die Heckscheibe kann zwischen einer angehoben Stellung, in der Sie mit ihrer oberen Kante unter Vorspannung an Dichtungsmitteln des Verdeckgestänges anliegt, und einer abgesenkten Stellung hin und her geschwenkt werden, in der die Heckscheibe in den Spannbügel abgesenkt ist. Zum Verstellen der Heckscheibe ist diese beiderseits mit jeweils einem Kniehebel versehen. Die Kniehebel sind bei angehobener Heckscheibe über deren Totpunkt bewegt und stützen so die Heckscheibe sicher ab. Zum Öffnen der Kniehebel ist das Gelenk jedes Kniehebels mit dem Verdeckgestänge durch ein Seil oder einen Bowdenzug derart gekoppelt, dass bei einem Öffnen des Faltverdecks die Kniehebel aus ihren Totpunktlagen hinwegbewegt werden und zusammenklappen.
Ausgehend von diesem Stand der Technik ist es Aufgabe der Erfindung, ein Faltverdeck anzugeben, bei dem der Heckscheibenträger insbesondere auf einfache Weise gekoppelt mit dem Verdeckgestänge abgelegt und aufgerichtet wird.

Diese Aufgabe wird erfindungsgemäß durch ein Faltverdeck mit den Merkmalen des Anspruchs 1 gelöst.

Bei dem erfindungsgemäßen Faltverdeck ist der Heckscheibenträger durch vordere Lenker und gleichzeitig durch hintere Lenker, d.h. aus Richtung des Fahrzeugbugs gesehen hinter den vorderen Lenkern angeordnete Lenker, schwenkbar gelagert, wobei die hinteren Lenker ihrerseits an dem Verdecklager des Verdeckgestänges schwenkbar gelagert sind. Durch diese Art der Lagerung ergibt sich eine definierte Ablege- und Aufrichtbewegung des Heckscheibenträgers, wobei durch die Kopplung der vorderen Lenker mit dem Verdeckgestänge die Ablege- und Aufrichtbewegung des Heckscheibenträgers auf einfache Weise mit dem Schließen und Öffnen des Faltverdecks koordiniert ist.

Unter Faltverdeck wird in diesem Zusammenhang ein Verdeck verstanden, bei dem zumindest einige Dachabschnitte aus einem faltbaren Material, beispielsweise einem Verdeckstoff, gefertigt sind, welches mit Hilfe des Verdeckgestänges in der gewünschten Form gehalten wird. Einzelne Dachabschnitte können auch eine feste, insbesondere schalenartige Gestaltung aufweisen, wobei die Schale oder Teile davon aus Metall, Kunststoff oder auch aus Glas oder einen sonstigem durchsichtigen Material besteht. Als Heckscheibenträger wird eine tragende Struktur, beispielsweise in Form eines an zumindest einer Seite offenen oder geschlossenen Rahmens verstanden, in welchem die Heckscheibe, vorzugsweise als Festglasscheibe ausgebildet, sicher und insbesondere weitgehend erschütterungsfrei gehalten ist. Ferner ist unter dem Begriff Heckscheibenträger auch eine Anordnung aus mehreren Trägerelementen zu verstehen, welche fest mit der Heckscheibe verbunden und an denen die vorderen und hinteren Lenker angelenkt sind.

Weitere Vorteile und Vorzüge der Erfindung ergeben sich aus der nachfolgenden Beschreibung sowie der Zeichnung.

So ist es insbesondere von Vorteil, den Heckscheibenträger fest mit dem Faltverdeck zu verbinden. Durch das Anbinden des Heckscheibenträgers an das Faltverdeck wirkt das Verdeckmaterial seinerseits als eine Art elastischer Lenker, durch den das Ablege- und Aufrichtverhalten des Heckscheibenträgers zusätzlich gezielt beeinflusst werden kann, wobei der Heckscheibenträger bei entsprechender Ausführung des Verdeckgestänges, beispielsweise durch entsprechende Querstriegel, gegebenenfalls auch durch das Verdeckmaterial in seiner angehobenen Stellung definiert gehalten wird. Alternativ ist es jedoch auch möglich, den Heckscheibenträger getrennt vom Verdeckmaterial auszubilden und am Verdeckgestänge entsprechende Dichtungselemente vorzusehen, gegen die der Heckscheibenträger vorgespannt wird, wenn er in seine angehobene Stellung bewegt wird.

Bei einer besonders bevorzugten Ausführungsform des erfindungsgemäßen Faltverdecks wird vorgeschlagen, dass jeder vordere Lenker zwei gelenkig miteinander verbundene Lenkerhebel aufweist, über die der Heckscheibenträger an den beiden Verdecklagern anlenkt ist. Die beiden miteinander verbundenen Lenkerhebel sind hierbei vorzugsweise so ausgebildet und gestaltet, dass sie einen Kniehebel bilden, welcher sich bei angehobener Stellung des Heckscheibenträgers in seinem Totpunkt befindet, so dass die Lenkerhebel erst durch entsprechende Krafteinwirkung auf das Gelenk wieder zusammenklappen. Gleichzeitig ist der Heckscheibenträger sicher an den beiden Verdecklagern abgestützt.

Bei dieser bevorzugten Ausführungsform wird ferner vorgeschlagen, als Kopplungselement für jeden der aus jeweils zwei Lenkerhebeln gebildeten vordern Lenker einen Steuerhebel einzusetzen, der schwenkbar am Verdeckgestänge gelagert ist und mit dem der diesem jeweils zugeordnete zweiteilige vordere Lenker bei einer Bewegung des Verdeckgestänges gelöst und zusammengeklappt werden kann. Dabei verhindert der Steuerhebel gleichzeitig ein unbeabsichtigtes Zusammenklappen des zweiteiligen vorderen Lenkers, mit dem der Steuerhebel zusammenwirkt.

Der Steuerhebel ist vorzugsweise beabstandet zu dem Gelenk zwischen den beiden Lenkerhebeln mit einem der Lenkerhebel bevorzugt durch ein Gelenk schwenkbar verbunden, so dass der mit dem Steuerhebel gekoppelte Lenkerhebel in einer definierten Position sicher gehalten ist. Vorzugsweise ist der Steuerhebel mit dem unteren der beiden Lenkerhebel, welcher am Verdecklager angelenkt ist, schwenkbar verbunden, da hierdurch das Faltverdeck beim Absenken störungsfrei zusammengelegt werden kann.

Bei einer zweiten Ausführungsform des erfindungsgemäßen Faltverdecks ist jedes Kopplungselement ein fest mit dem Verdeckgestänge verbundener Steuerfortsatz ist, an welchem der diesem jeweils zugeordnete vordere Lenker unmittelbar angelenkt ist. Durch diese unmittelbare Anbindung der vorderen Lenker an das Verdeckgestänge ist die Anzahl erforderlicher Kopplungsstellen und damit die Anzahl erforderlicher Komponenten sehr gering, wodurch sich insbesondere ein einfacher Aufbau des Faltverdecks ergibt. Bei dieser zweiten Ausführungsform ist es insbesondere auch von Vorteil, wenn das Verdeckmaterial des Faltverdecks fest mit dem Heckscheibenträger verbunden ist, da so die Ablege- und Anhebebewegung des Heckscheibenträgers gezielt beeinflusst wird.

Das Verdeckgestänge weist zum Befestigen und Ansteuern des Faltverdecks an jeder Seite des Faltverdecks vorzugsweise zwei ein Viergelenk bildende Verdecklenker auf, die das Faltverdeck abstützen und ansteuern, wobei die beiden Steuerlenker, mit denen der Heckscheibenträger an das Verdeckgestänge gekoppelt ist, an jeweils einem der beiden das Viergelenk bildenden Verdecklenker vorgesehen ist. So ist es von Vorteil, wenn die als Steuerhebel ausgebildeten Kopplungselemente an den jeweils vorderen der beiden Verdecklenker angelenkt sind, da die vorderen Verdecklenker, die bei geschlossenem Faltverdeck üblicherweise die B-Säule bilden, entsprechend steif ausgebildet sind. Generell ist es jedoch auch denkbar, die Steuerhebel an den beiden hinteren Verdecklenkern anzulenken.

Um die Verbindung zwischen dem Verdeckgestänge und den vorderen Lenkern möglichst kurz zu bemessen, wird bei der Ausführungsform, bei der die vorderen Lenker der Heckscheibe nicht an den Verdecklagern abgestützt, sondern an den Steuerfortsätzen des Verdeckgestänges angelenkt sind, vorgeschlagen, die als Steuerfortsatz ausgebildeten Kopplungselemente an den jeweils hinteren der beiden Verdecklenker vorzusehen.

Nachfolgend wird die Erfindung anhand zweier Ausführungsbeispiele unter Bezugnahme auf die Zeichnung näher erläutert. Darin zeigt:
- Fig. 1: eine nicht erfindungsgemäß schematische Seitenansicht eines Faltverdecks in geschlossener Position mit einem ersten Ausführungsbeispiel eines erfindungsgemäßen versenkbaren Heckfenster,
- Fig. 2: eine nicht erfindungsgemäß schematische Seitenansicht des Faltverdecks nach Fig. 1 in einer Zwischenposition während des Ansenkens des Faltverdecks,
- Fig. 3: eine nicht erfindungsgemäß schematische Seitenansicht des Faltverdecks nach Fig. 1 in seiner abgesenkten Position mit abgesenktem Heckfenster,
- Fig. 4: eine schematische Seitenansicht eines Faltverdecks in geschlossener Position, das mit einem zweiten Ausführungsbeispiel eines erfindungsgemäß versenkbaren Heckfensters ausgestattet ist,
- Fig. 5: eine schematische Seitenansicht des Faltverdecks nach Fig. 4 in einer Zwischenposition während des Absenkens des Faltverdecks,
- Fig. 6: eine schematische Seitenansicht des Faltverdecks nach Fig. 4 in seiner abgesenkten Position mit abgesenktem Heckfenster,

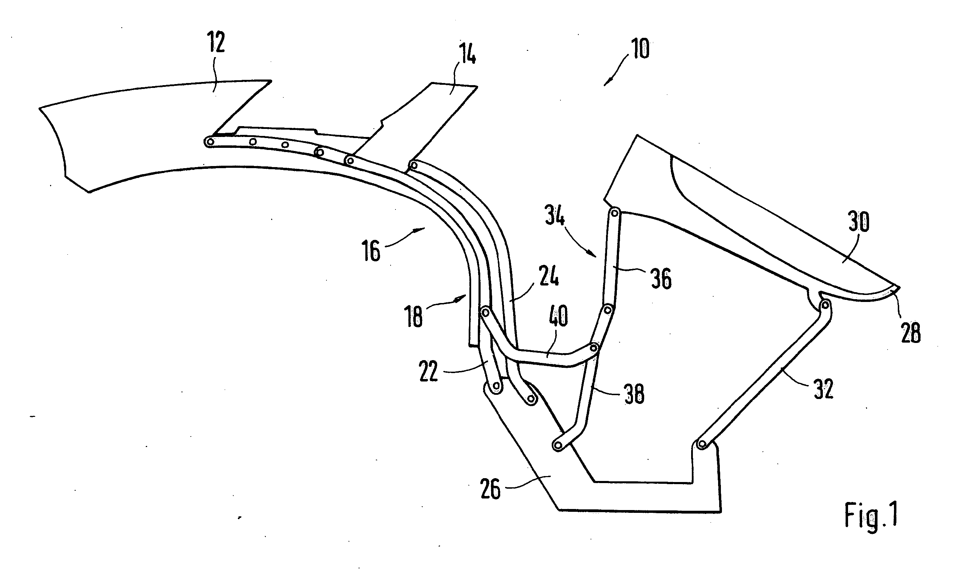

In den Fig. 1 bis 3 ist in schematischer Darstellung eine Seitenansicht eines Fahrzeugs mit einem Faltverdeck 10 gezeigt.
Wie insbesondere in Fig. 1 dargestellt ist, in der das Faltverdeck 10 in geschlossener Verdeckstellung gezeigt ist, hat das Faltverdeck 10 einen vorderen ersten Dachrahmen 12 sowie einen mittleren Dachrahmen 14. Die beiden Dachrahmen 12 und 14 sind durch ein Verdeckgestänge 16 beweglich derart miteinander gekoppelt sind, dass der erste Dachrahmen 12 beim Schließen und Öffnen über den zweite Dachrahmen 14 hinwegbewegt wird. Zu diesem Zweck ist an jedem der beiden Seitenrändern der Dachrahmen 12 und 14 eine Dachlenkeranordnung 18 aus mehreren miteinander gelenkig verbundenen Dachlenkern 20 vorgesehen, von denen mehrere auch an dem jeweiligen Seitenrand zumindest eines der Dachrahmen 12 und 14 schwenkbar befestigt sind.

Jede der beiden Dachlenkeranordnungen 18 beiderseits der Dachrahmen 12 und 14 ist an zwei Verdecklenker 22 und 24 angekoppelt, welche jeweils an einem der beiden karosseriefesten Verdecklager 26 schwenkbar gelagert sind. Die Verdecklenker 22 und 24 sind an dem zweiten Dachrahmen 14 angelenkt und tragen diesen gemeinsam mit dem ersten Dachrahmen 12. Gleichzeitig dienen die beiden Verdecklenker 22 und 24 zum Ansteuern und Verstellen der Dachlenker 20 beim Schließen und Öffnen des Faltverdecks 10.

Das heckseitige Ende des Faltverdecks 10 wird durch einen Heckscheibenträger 28 gebildet. Der Heckscheibenträger 28 trägt eine Festglasscheibe 30, welche durch Dichtmittel (nicht dargestellt) im Heckscheibenträger 28 gehalten ist. Der Heckscheibenträger 28 ist an den freien Enden zweier nahe dem Fahrzeugheck angeordneter hinterer Lenker 32 schwenkbar gelagert, deren andere Enden an den hierzu verlängerten Verdecklagern 26 gelagert sind. Aus Richtung des Fahrzeugbugs gesehen vor den hinteren Lenkern 32 sind zwei vordere Lenker 34 am Heckscheibenträger 28 angelenkt, wobei die beiden vorderen Lenker 34 jeweils als Kniehebel aus zwei gelenkig miteinander verbundenen Lenkerhebeln 36 und 38 gebildet sind. Der untere der beiden Lenkerhebel 38 jedes vorderen Lenkers 34 ist gleichfalls an dem Verdecklager 26 gelagert.

Damit sich der Heckscheibenträgers 28 entsprechend der Stellbewegung des Faltverdecks 10 bei dessen Schließen oder Öffnen bewegt, ist der Heckscheibenträger 28 mit dem Verdeckgestänge 16 gekoppelt. Hierzu ist an jedem der beiden vorderen Verdecklenker 22 jeweils ein Steuerhebel 40 mit seinem einen Ende angelenkt, während das andere Ende jedes Steuerhebels 40 an dem jeweils unteren Lenkerhebel 38 des vorderen Lenkers 34 angelenkt ist.

Wenn das Faltverdeck 10 geschlossen ist, so wie es in Fig. 1 gezeigt ist, verlaufen die beiden Lenkerhebel 36 und 38 so zueinander gestreckt, dass sie sich in einer Totpunktlage befinden, in der sich die Lenkerhebel 36 und 38 nur durch Einwirkung einer in Klapprichtung wirkenden äußeren Kraft aus den Totpunktlagen bewegen. Durch das Zusammenwirken des Steuerhebels 40 mit den Lenkerhebeln 36 und 38 wird so verhindert, dass die vorderen Lenker 34 zusammenklappen, so dass sich der Heckscheibenträger 28 über die vorderen Lenker 34 sowie die hinteren Lenker 32 auf den Verdecklagern 26 abstützen kann und auf diese Weise in einer definierten Lage bezüglich des Fahrzeuges gehalten ist.

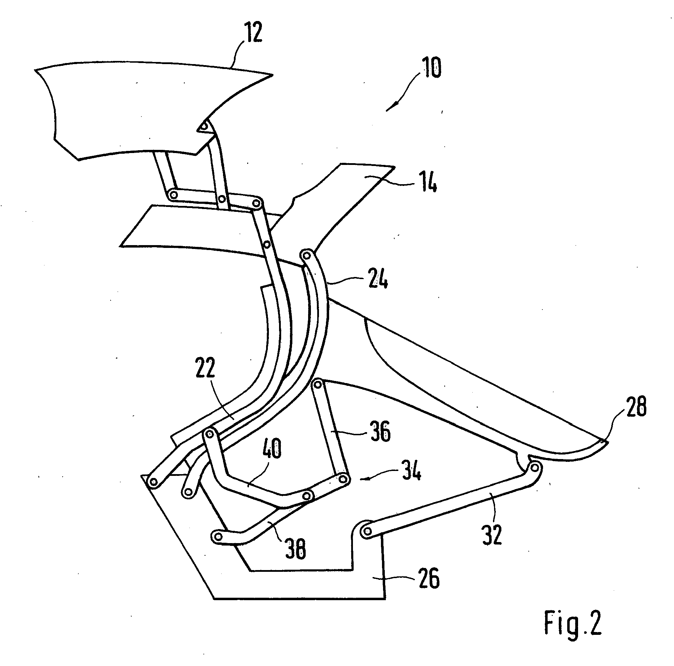

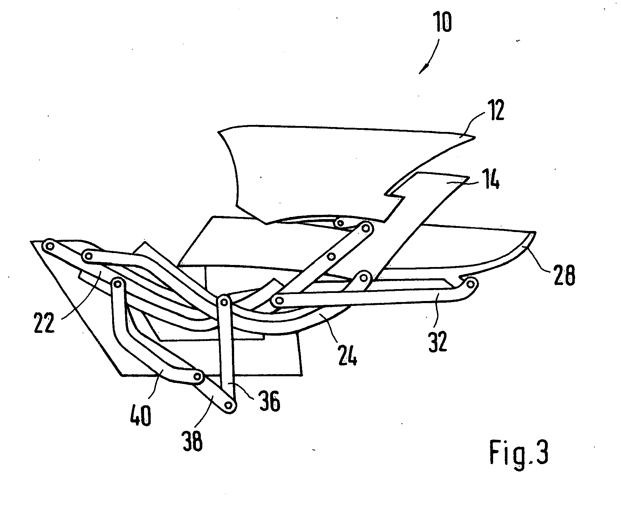

Wird nun das Faltverdeck 10 von seiner geschlossenen Verdeckstellung in seine abgesenkte Verdeckstellung bewegt, dieser Vorgang ist in den Fig. 2 und 3 gezeigt, bewirken die beiden Verdecklenker 22 und 24 an jeder Seite des Faltverdecks 10 durch ihre Kopplung mit den Dachlenkeranordnungen 18 der beiden Dachabschnitte 12 und 14 ein annähernd paralleles Übereinanderbewegen der beiden Dachabschnitte 12 und 14. Gleichzeitig werden durch die beiden Steuerhebel 40 die vorderen gelenkig miteinander verbundenen Lenkerhebel 36 und 38 aus ihren Totpunktlagen bewegt, in welchen sie den Heckscheibenträger 28 angehoben gehalten haben. Durch das Zusammenwirken der vorderen Lenker 34 mit den Verdecklenkern 22 sowie das Zusammenwirken der vorderen Lenker 34 mit den hinteren Lenkern 32 vollzieht der Heckscheibenträger 28 entsprechend der Bewegung des Verdeckgestänges 16 eine definierte Ablegebewegung, die aus den Fig. 2 und 3 erkennbar ist.

Nach dem das Faltverdeck 10 vollständig abgesenkt ist, ist der Heckscheibenträger 28 geschützt unter den weiteren Dachrahmen 12 und 14 positioniert (vgl. Fig. 3), wobei die einzelnen Lenker des Verdeckgestänges 16 sowie des Heckscheibenträgers 28 zusammengelegt sind, dass sich ein minimales erforderliches Volumen für das zusammengelegte Faltverdeck 10 ergibt.

Beim Auffalten des Faltverdecks 10 steuern die Verdecklenker 22 und 24 in umgekehrter Reihenfolge die Dachlenkeranordnungen 18 sowie die vorderen Lenker 34 an, wodurch sich das Faltdach 10 wieder entfaltet und der Heckscheibenträger 28 wieder in seine angehobene Stellung bewegt wird.

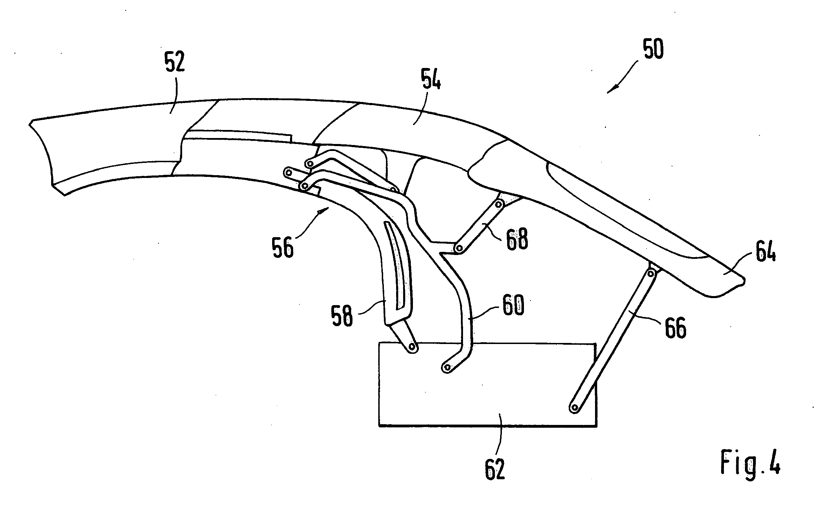

In den Fig. 4 bis 6 ist ein zweites Ausführungsbeispiel eines Faltverdecks 50 gezeigt. Das Faltverdeck 50 entspricht in seinem Aufbau im wesentlichen dem Aufbau des Faltverdecks 10.

Wie insbesondere Fig. 4 zeigt, hat das Faltverdeck 50 gleichfalls zwei Dachrahmen 52 und 54, welche an ihren Seitenrändern durch ein Verdeckgestänge 56 getragen sind. Das Verdeckgestänge 56 weist hierzu zwei Dachlenkeranordnungen 56 auf, welche ihrerseits durch zwei als Viergelenk an jeder Seite des Faltverdecks 50 angeordnete Verdecklenker 58 und 60 angesteuert und getragen werden. Die beiden Verdecklenker 58 und 60 sind auch bei diesem zweiten Ausführungsbeispiel an karosseriefesten Verdecklagern 62 schwenkbar gelagert.

Der Heckscheibenträger 64 ist durch zwei hintere Lenker 66 schwenkbar an den beiden Verdecklagern 62 gelagert. Des weiteren weist der Heckscheibenträger 64 an seiner Unterseite zwei vordere Lenker 68 auf, welche schwenkbar an dem Heckscheibenträger 64 angelenkt sind. Jeder der vorderen Lenker 68 ist an einem Steuerfortsatz 70 angelenkt, welcher etwa rechtwinklig in Richtung des Fahrzeughecks nach hinten von dem jeweiligen hinteren Verdecklenker 60 absteht. Ferner ist das Verdeckmaterial 72 des Faltverdecks 50 fest mit der vorderen Kante des Heckscheibenträgers 64 verbunden.

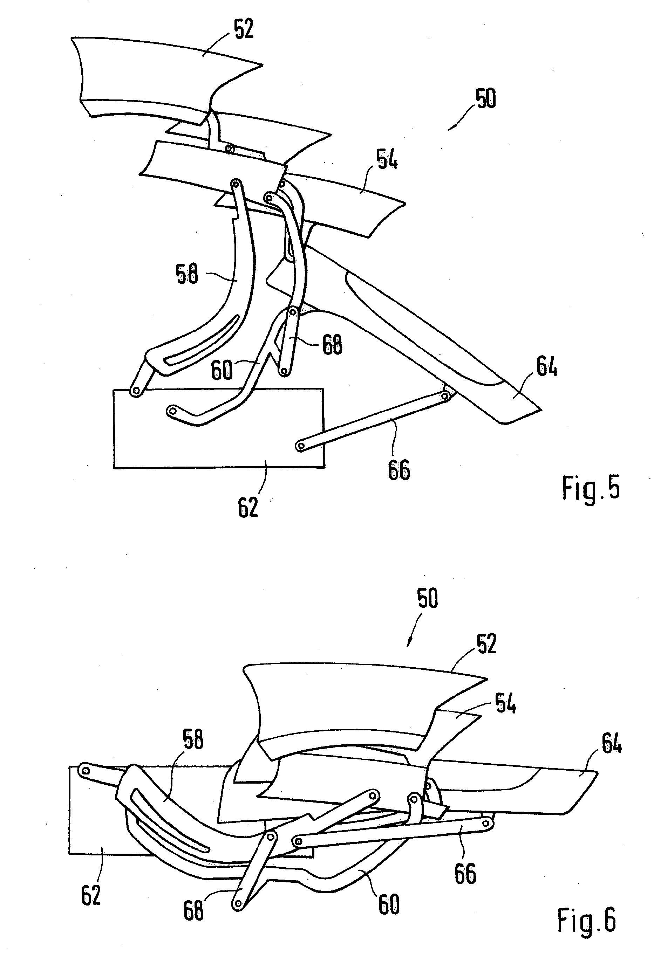

Wird nun das Faltverdeck 50 von seiner in Fig. 4 gezeigten, geschlossenen Stellung bewegt, dieser Vorgang ist schematisch in den Fig. 5 und 6 gezeigt, werden auch hier die Dachrahmen 52 und 54 relativ zueinander und übereinander bewegt, während gleichzeitig die hinteren Verdecklenker 60 über die Steuerfortsätze 70 die vorderen Lenker 68 des Heckscheibenträgers 64 nach hinten in Richtung Fahrzeugheck umlegen und dabei gleichzeitig den Heckscheibenträger 64 nach hinten drücken welcher durch die angelenkten hinteren Lenker 66 eine Schwenk- und Absenkbewegung vollzieht.

Nach dem das Faltverdeck 50 vollständig zusammengelegt ist, ist auch hier der Heckscheibenträger 64 geschützt unter den beiden Dachrahmen 52 und 54 angeordnet.

Beim Auffalten des Faltverdecks 50 vollziehen die Dachrahmen 52 und 54 sowie der Heckscheibenträger 64 in umgekehrter Reihenfolge den zuvor beschrieben Bewegungsablauf, bis das Faltverdeck 50 wieder seine in Fig. 4 gezeigte, geschlossene Verdeckstellung einnimmt.

### Bezugszeichenliste:

- 10: Faltverdeck
- 12: erster Dachrahmen
- 14: zweiter Dachrahmen
- 16: Verdeckgestänge
- 18: Dachlenkeranordnung
- 20: Dachlenker
- 22: Verdecklenker
- 24: Verdecklenker
- 26: Verdecklager
- 28: Heckscheibenträger
- 30: Festglasscheibe
- 32: hinterer Lenker
- 34: vorderer Lenker
- 36: oberer Lenkerhebel
- 38: unterer Lenkerhebel
- 40: Steuerhebel
- 50: Faltverdeck
- 52: vorderer Dachrahmen
- 54: hinterer Dachrahmen
- 56: Verdeckgestänge
- 58: vordere Verdecklenker
- 60: hintere Verdecklenker
- 62: Verdecklager
- 64: Heckscheibenträger
- 66: hintere Lenker
- 68: vordere Lenker
- 70: Steuerfortsatz
- 72: Verdeckmaterial

## Patentansprüche

1. Faltverdeck für ein Kraftfahrzeug, mit einem Verdeckgestänge (56), wobei das Kraftfahrzeug zwei karosseriefeste Verdecklager (62) aufweist, an welchen das Verdeckgestänge (56) des Faltverdecks (50) zwischen einer geschlossenen Verdeckstellung und einer abgesenkten Verdeckstellung schwenkbar lagerbar ist, sowie einem schwenkbaren Heckscheibenträger (64), welcher mit dem Verdeckgestänge (56) derart gekoppelt ist, dass er bei geschlossenem Faltverdeck (50) angehoben und bei abgesenktem Faltverdeck (50) abgesenkt ist, wobei das Verdeckgestänge (56) zum Verstellen des Heckscheibenträgers (64) zwischen der angehobenen und abgesenkten Stellung des Heckscheibenträgers (64) mit an diesem beiderseits in Richtung Fahrzeugbug gesehen vorne gelagerten vorderen Lenkern (68) durch jeweils mindestens ein Kopplungselement (70) gekoppelt und der Heckscheibenträger (64) fest mit einem Verdeckstoff des Faltverdecks (50) verbunden ist, **dadurch gekennzeichnet, dass** das Faltverdeck hintere Lenker (66) aufweist, wobei der Heckscheibenträger (64) beiderseits durch jeweils einen der hinteren Lenker (66) direkt an dem Verdecklager (62) anlenkbar ist und dass jedes Kopplungselement ein fest mit dem Verdeckgestänge (56) verbundener Steuerfortsatz (70) ist, an welchem der diesem jeweils zugeordnete vordere Lenker (68) unmittelbar angelenkt ist.

2. Faltverdeck nach Anspruch 1, **dadurch gekennzeichnet, dass** das Verdeckgestänge (56) zwei ein Viergelenk bildende Verdecklenker (58, 60) aufweist, welche das Faltverdeck (50) abstützen, wobei jedes Kopplungselement (70) an jeweils einem der beiden das Viergelenk bildenden Verdecklenker (58, 60) vorgesehen ist.

3. Faltverdeck nach Anspruch 2, **dadurch gekennzeichnet, dass** die als Steuerfortsatz (70) ausgebildeten Kopplungselemente an den jeweils hinteren der beiden Verdecklenker (60) vorgesehen sind.

4. Kraftfahrzeug mit wenigstens einem, als Brennkraftmaschine ausgebildeten, Antriebsmotor, der über ein Getriebe wenigstens eine Achse antreibt, **dadurch gekennzeichnet, dass** es ein Faltverdeck nach wenigstens einem der Ansprüche 1-3 aufweist.

## Claims

1. Folding top for a motor vehicle, with a top linkage (56), wherein the motor vehicle has two top bearings (62) which are fixed on the vehicle body and on which the top linkage (56) of the folding top (50) can be mounted such that it can be pivoted between a closed position of the top and a lowered position of the top, and with a pivotable rear window carrier (64) which is coupled to the top linkage (56) in such a manner that it is raised when the folding top (50) is closed and is lowered when the folding top (50) is lowered, the top linkage (56) being coupled, for the purpose of displacing the rear window carrier (64) between the raised and lowered position of the rear window carrier (64), to front links (68) mounted on the latter on both sides at the front, as seen in the direction of the front end of the vehicle, by means of in each case at least one coupling element (70) and the rear window carrier (64) being connected fixedly to a top material of the folding top (50), **characterized in that** the folding top has rear links (66), wherein the rear window carrier (64) can be coupled on both sides directly to the top bearing (62) by means of in each case one of the rear links (66), and **in that** each coupling element is a control extension (70) which is connected fixedly to the top linkage (56) and to which the front link (68) assigned in each case to said control extension is directly coupled.

2. Folding top according to Claim 1, **characterized in that** the top linkage (56) has two top links (58, 60) which form a four-bar linkage and support the folding top (50), each coupling element (70) being provided on in each case one of the two top links (58, 60) which form the four-bar linkage.

3. Folding top according to Claim 2, **characterized in that** the coupling elements designed as the control extension (70) are provided on the rear of the two top links (60) in each case.

4. Motor vehicle with at least one driving engine which is embodied as an internal combustion engine and drives at least one axle via a transmission, **characterized in that** it has a folding top according to at least one of Claims 1-3.

## Revendications

1. Capote pliable pour un véhicule automobile, comprenant une tringlerie de capote (56), le véhicule automobile présentant deux supports de capote (62) fixés à la carrosserie, sur lesquels la tringlerie de capote (56) de la capote pliable (50) peut être supportée de manière pivotante entre une position de capote fermée et une position de capote abaissée, ainsi qu'un support de hayon arrière pivotant (64) qui est accouplé à la tringlerie de capote (56) de telle sorte qu'il soit soulevé lorsque la capote pliable (50) est fermée et qu'il soit abaissé lorsque la capote pliable (50) est abaissée, la tringlerie de capote (56), pour le déplacement du support de hayon arrière (64) entre la position soulevée et la position abaissée du support de hayon arrière (64), étant accouplée à des bras avant (68) supportés sur celle-ci des deux côtés à l'avant, vu dans la direction de l'avant du véhicule par au moins un élément d'accouplement respectif (70) et le support de hayon arrière (64) étant connecté fixement à une toile de capote de la capote pliable (50), **caractérisée en ce que** la capote pliable présente des bras arrière (66), le support de hayon arrière (64) pouvant être articulé des deux côtés par l'un respectif des bras arrière (66) directement au support de capote (62) et **en ce que** chaque élément d'accouplement est une saillie de commande (70) connectée fixement à la tringlerie de capote (56), sur laquelle est articulé directement le bras oscillant avant (68) associé à celle-ci.

2. Capote pliable selon la revendication 1, **caractérisée en ce que** la tringlerie de capote (56) présente deux bras de capote (58, 60) formant un quadrilatère articulé, qui supportent la capote pliable (50), chaque élément d'accouplement (70) étant prévu au niveau de l'un respectif des deux bras de capote (58, 60) formant le quadrilatère articulé.

3. Capote pliable selon la revendication 2, **caractérisée en ce que** les éléments d'accouplement réalisés sous forme de saillie de commande (70) sont prévus au niveau du bras de capote arrière des deux bras de capote (60).

4. Véhicule comprenant au moins un moteur d'entraînement réalisé sous forme de moteur à combustion interne, qui, par le biais d'une transmission, entraîne au moins un axe, **caractérisé en ce qu'**il présente une capote pliable selon au moins l'une quelconque des revendications 1 à 3.
